# EUROPEAN PATENT APPLICATION

(11) **EP 1 508 771 A2**
(43) Date of publication of application: **23.02.2005**
(21) Application number: 04010478.8
(22) Date of filing: 03.05.2004
(51) Int. Cl.: G01B 11/02, G01B 11/28, G06F 3/033

(54) **A measurement instrument**

(30) Priority: 14.08.2003 US 641501
(71) Applicant: Agilent Technologies, Inc., Palo Alto, CA 94306 (US)
(72) Inventor: Brosnan, Michael J., Fremont, CA 94536 (US)
(74) Representative: Liesegang, Eva

(57) **Abstract**

Embodiments in accordance with the invention provide a measurement instrument comprising an image acquisition system (110), an optical navigation engine (120), an arithmetic engine (130) and a display (140). The optical navigation engine (120) is communicatively coupled to the image acquisition system (110). The arithmetic engine (130) is communicatively coupled to the optical navigation engine (120). The display (140) is communicatively coupled to said arithmetic engine (130). The invention is used to determine features on maps, charts, drawings, photographs etc. A given path is traced and the distance of said path and/or the area enclosed by said path are calculated.

## Description

### FIELD OF THE INVENTION

Embodiments in accordance with the invention relate to distance and area measurement from maps, drawings, photographs and the like.

### BACKGROUND OF THE INVENTION

Often measurements are made from maps, charts, drawings, photographs, schematics, blueprints, plans and other the like objects. The measurements may comprise distance, area and the like. Furthermore, the distance may be along a straight, curved or irregular path, and/or the area may be of any shape. There are a number of instruments for measuring the distances and/or area, such as planimeters and map measuring wheels. However, the usefulness of such measurement instruments is somewhat restricted.

The planimeter is utilized for measuring the area of a planar region. The planimeter comprises an anchor arm and a tracing arm, which are joined at an elbow having a wheel and scale assembly. The wheel rolls and slides along the surface of the tabletop, as a pointer on the tracing arm traverses the perimeter of the region. As the tracing arm traverses the perimeter, the wheel turns the scale. Accordingly, the scale indicates a number that is proportional to the area of the region. A conversion factor, which depends upon the scale of the representation, is applied to the indicated number to determine the actual area. Unfortunately, the planimeter's large form factor is not readily portable. Furthermore, the planimeter does not measure the distance along the path, only the area of the enclosed region.

The map-measuring wheel is utilized for measuring the distance along a path. The map-measuring wheel typically comprises a roller wheel, an actuator/sensor, an arithmetic unit and a display. The roller wheel is coupled to the actuator/sensor, which senses the rotation of the roller wheel. The actuator/sensor provides a signal indicative of the rotation of the roller wheel to the arithmetic unit. The arithmetic unit calculates the distance from the signal indicative of the rotation of the roller wheel and an applicable scale factor. The calculated distance is then output on the display. The map-measuring wheel has a relatively small form factor. However, the map-measuring wheel typically can only calculate the areas of certain regular shapes.

Furthermore, the map-measuring wheel is problematic in that there must be sufficient frictional or gravitation force between the roller wheel and the object. If there is insufficient frication or gravitation force, the roller wheel will slip causing measurement errors. The map-measuring wheel is also problematic in that the roller wheel must continually point along the path in a single direction. Therefore, the user must continually pivot the device while tracing an irregular path or shape. Such pivoting action typically causes stress and fatigue in the user. In addition, the pivoting can also cause binding in the roller wheel assembly, thereby resulting in measurement errors. The map-measuring wheel also suffers from limited resolution. More specifically, the resolution is a function of the size of the roller wheel and the rotational increment that is sensed.

### SUMMARY OF THE INVENTION

Embodiments in accordance with the invention provide an instrument for measuring distances and/or areas. In one embodiment in accordance with the invention, the measurement instrument comprises an image acquisition system, an optical navigation engine, an arithmetic unit and a display. The optical navigation engine is communicatively coupled to the image acquisition system. The arithmetic unit is communicatively coupled to the optical navigation engine. The display is communicatively coupled to the arithmetic unit.

In one embodiment in accordance with the invention, the method of making measurements comprising generating a series of images of a given area of an object. A series of relative changes in position of the pattern in each set of successive images is determined. A distance of a given path on the object is calculated as a function of the series of relative change in position.

### BRIEF DESCRIPTION OF THE DRAWINGS

Embodiments in accordance with the invention are illustrated by way of example and not by way of limitation, in the figures of the accompanying drawings and in which like reference numerals refer to similar elements and in which:
FIG. 1 shows a block diagram of a measuring instrument, in one embodiment in accordance with the invention.
FIG. 2 shows a block diagram of an image acquisition system, in one embodiment in accordance with the invention.
FIG. 3 shows a flow diagram of a method of making a measurement, in one embodiment in accordance with the invention.
FIG. 4 shows an illustration of an exemplary measurement instrument, in one embodiment in accordance with the invention.

### DETAILED DESCRIPTION

Reference will now be made in detail to embodiments in accordance with the invention, examples of which are illustrated in the accompanying drawings. While various embodiments in accordance with the invention will be described, it will be understood that they are not intended to limit the invention to such embodiments. On the contrary, the invention is intended to cover alternatives, modifications and equivalents, which may be included within the invention as defined by the appended claims. Furthermore, in the following detailed description, numerous specific details are set forth in order to provide a thorough understanding of various embodiments in accordance with the invention. However, it is understood that the invention may be practiced without these specific details. In other instances, well-known methods, procedures, components, and circuits have not been described in detail as not to unnecessarily obscure aspects of embodiments in accordance with the invention.

Embodiments in accordance with the invention provide a system and method for measuring distances, areas and/or other dimensional features on maps, charts, drawings, photographs, schematics, blueprints, plans and/or other similar objects. The system and method utilizes an optical source, an optical sensor and a digital signal processor for tracking the position of the measurement instrument along a given path. The resulting positional information is utilized to calculate various measurements.

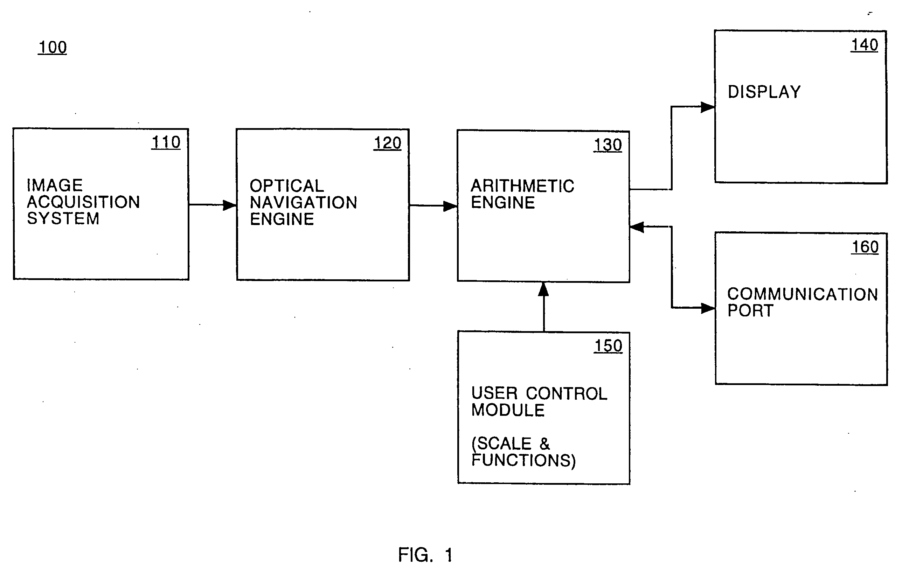

Referring to FIG. 1, a block diagram of a measuring instrument 100, in one embodiment in accordance with the invention, is shown. As depicted in FIG. 1, the measurement instrument 100 comprises an image acquisition system 110, an optical navigation engine 120, an arithmetic unit 130 and a display 140. The image acquisition system 110 is communicatively coupled to the optical navigation engine 120. The optical navigation engine 120 is communicatively coupled to the arithmetic engine 130. The arithmetic unit 130 is communicatively coupled to the display 140.

In one embodiment in accordance with the invention, the image acquisition system 110 illuminates a surface area of a given object and captures the light reflected off features of the illuminated area. The image acquisition system 110 generates a series of images from the reflected light. In one embodiment in accordance with the invention, the images are captured at a rate of 100 images or more per second. In an exemplary embodiment in accordance with the invention, the capture rate is approximately 1500 images per second. In one embodiment in accordance with the invention, each image comprises 100 pixels or more. In an exemplary embodiment in accordance with the invention, approximately 450 pixels are captured per image. The images are output from the image acquisition system 110 to the optical navigation engine 120.

In one embodiment in accordance with the invention, the optical navigation engine 120 identifies the displacement of common features (e.g., patterns) in the sequential images thus tracking the motion thereof. Because the rate of image acquisition is sufficiently high, much of the same features are contained within sequential images. Accordingly, displacement of common features in the most recent image and one or more of the previous images are identified by the optical navigation engine 120. Based upon the common features, the optical navigation engine 120 determines the relative movement of the measurement instrument. This information is then translated into a corresponding series of direction and magnitude data by the optical navigation engine 120. Each direction and magnitude data value is representative of the relative movement of the measurement instrument (e.g., between a particular image and the next image in the series of images). The series of direction and magnitude data is output from the optical navigation engine 120 to the arithmetic unit 130.

In one embodiment in accordance with the invention, the arithmetic engine 130 calculates the distance and/or area of a particular object from the series of direction and magnitude data and a given scale factor. The distance and/or area may also be calculated in a given unit of measure (e.g., kilometers or miles). The distance and/or area measurement is output from the arithmetic engine 130 for presentation to a user on the display 140.

In one embodiment in accordance with the invention, the measurement instrument 100 may further comprise a user control module 150 communicatively coupled to the arithmetic engine 130. The user control module 150 enables entry/selection of a scale factor, unit of measure and/or functions (e.g., distance, area). The user control module 150 may also enable power on and/or off of the instrument, clearing of the instrument and/or entry/selection of the starting point and/or end point of a given path. Accordingly, the arithmetic engine 130 calculates a given function utilizing a given scale factor in a given unit of measure received from the user control module 130.

In one embodiment in accordance with the invention, the measurement instrument 100 may further comprise a communication port 160 communicatively coupled to the arithmetic engine 130. The communication port 160 enables the transfer of measurements and/or selection of a scale factor and/or function to and/or from a computing device and/or input/output device (e.g., computer, monitor, printer). In one embodiment in accordance with the invention, the communication port 160 provides for wired communication. In another embodiment in accordance with the invention, the communication port 160 provides wireless communication.

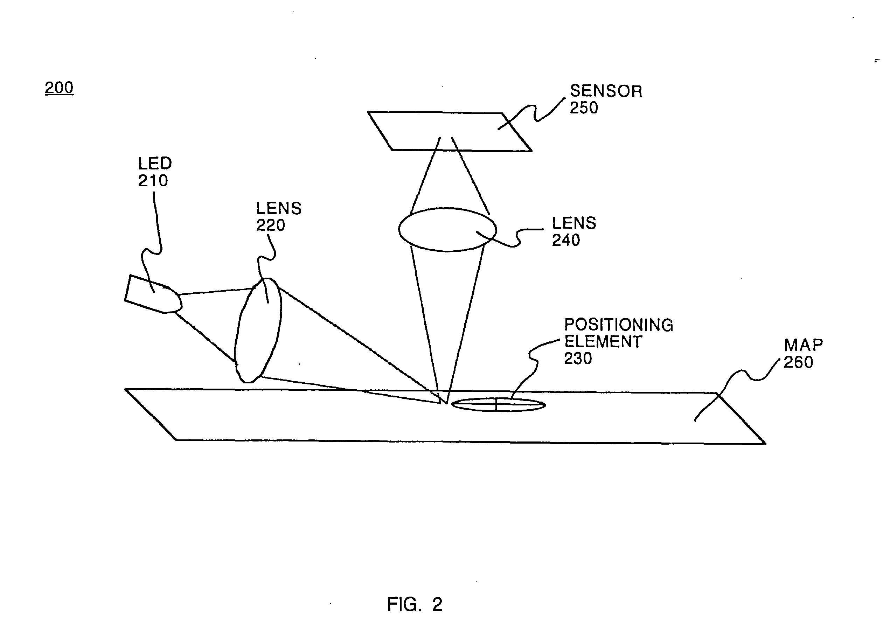

Referring now to FIG. 2, a block diagram of an image acquisition system 200, in one embodiment in accordance with the invention, is shown. As depicted in FIG. 2, the image acquisition system 200 comprises a light source 210, a first lens 220, a positioning element 230, a second lens 240 and an optical sensor 250. The light source (e.g., light emitting diode) 210 emits light. The first lens 220 focuses the light from the light source on a given area of an object (e.g., map) 260. The light is reflected from the object and is focused on the optical sensor (e.g., camera chip) 250 by the second lens 240. Small changes in the reflected light are sufficient to generate usable data for output to an optical navigation engine.

In one embodiment in accordance with the invention, the light is focused to reflect off an area of the object at the location of the positioning element (e.g., reticle, pointer) 230. In another embodiment in accordance with the invention, the light is focused to reflect off an area of the object 260 at a location adjacent to the positioning element 230. Furthermore, as the positioning element 230 is moved over the object, the optical source 210, first lens 220, second lens 240 and optical sensor 250 all move relative to the positioning element 230.

In one embodiment in accordance with the invention, the optical sensor 250 detects light reflected off of microscopic textural features at a rate of 100 images or more per second. In one embodiment in accordance with the invention, each image contains 100 or more pixels. In an exemplary embodiment in accordance with the invention; the image formed by the optical sensor 250 is 30 pixels wide and 30 pixels long. Each pixel is approximately 60 by 60 micrometers (µm) in dimension. In one embodiment in accordance with the present invention, an interpolation algorithm is utilized to achieve resolution to one sixteen of a pixel (e.g., 3.75 µm).

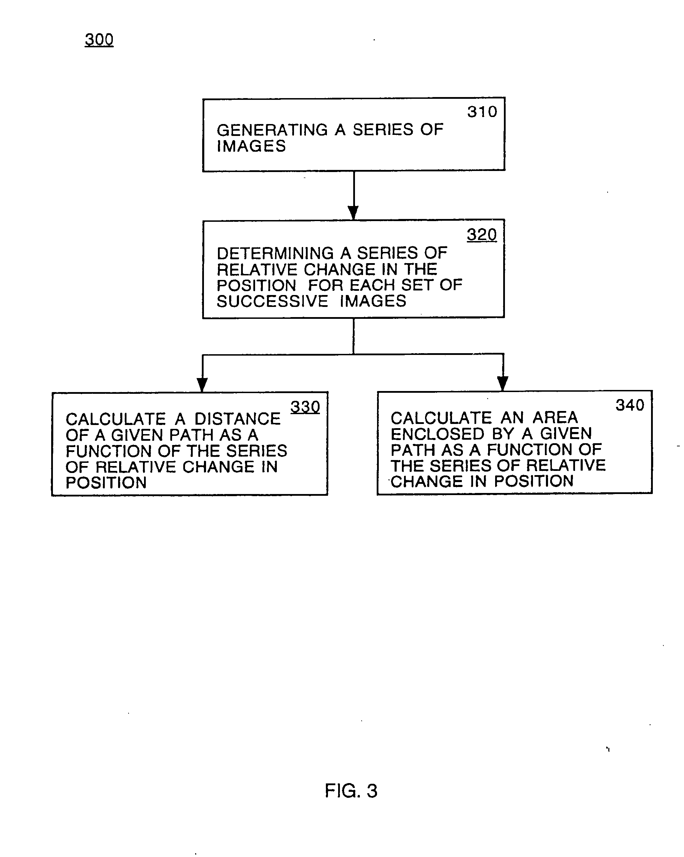

Referring now to FIG. 3, a flow diagram of a method of making a measurement 300, in one embodiment in accordance with the invention, is shown. As depicted in FIG. 3, the method 300 begins by generating a series of images of a given area of an object, at 310. The series of images is generated at 100 or more images per second. In an exemplary. embodiment in accordance with the invention, an optical sensor generates 1,500 images per second.

At 320, a series of relative changes in the X and Y coordinates of the relative chane in the position for each set of successive images is determined. For each set of successive images, the change in the X and Y coordinates of the pattern indicates the relative change in direction and magnitude of movement of the measurement instrument. In one embodiments of the present invention, the relative change in the direction and magnitude can be determined at 100 or more counts per inch and at a speed of an inch or more per second. In an exemplary embodiment in accordance with the invention, the relative change in the direction and magnitude of movement can be determined at 400 counts per inch and at speeds up to 12 inches per second.

At 330, the series of relative changes in the X and Y coordinates are summed to calculate the distance of a path traced by the measurement instrument. In one embodiment in accordance with the invention, the distance is calculated upon an indication that the entire path has been traced. In another embodiment in accordance with the invention, the distance is calculated as the path is being traced.

At 340, the successive relative changes in the X and Y coordinates may also be utilized to calculate the area enclosed by the path. In one embodiment in accordance with the invention, the path is enclosed by a straight line from the X and Y coordinates of the most recent position of the measurement instrument back to the starting X and Y coordinates of the measurement instrument. In one embodiment in accordance with the present invention, the area is calculated upon indication that the entire path has been traced. In another embodiment in accordance with the invention, the area is calculated as the path is being traced.

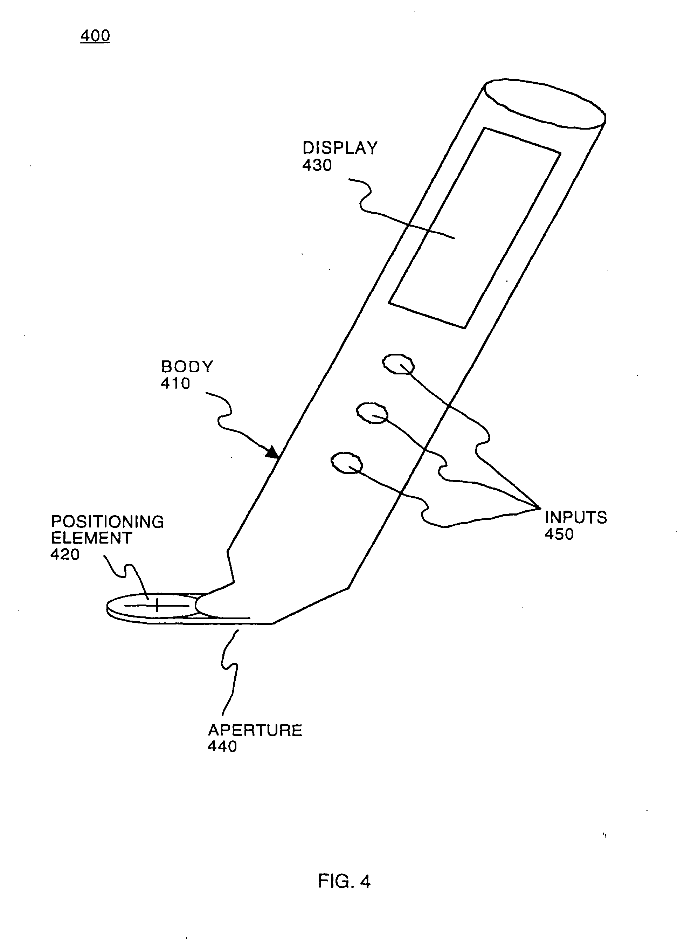

Referring now to FIG. 4, an illustration of an exemplary measurement instrument 400, in one embodiment in accordance with the invention, is shown. As depicted in FIG. 4, the measurement instrument 400 comprises a body 410 having a positioning element (e.g., reticle, pointer) 420, a display (e.g., liquid crystal display) 430 and an aperture (not visible) 440. The measurement instrument 400 may further comprise one or more inputs (e.g., buttons) 450 and/or a communication port (not shown) 160.

In one embodiment in accordance with the invention, the body 410 of the measurement instrument 400 is held by a user and moved about an object such that the positioning element 420 traces a desired path. Accordingly, the aperture 440 moves about the object along the same path, or relative thereto. In addition, the image acquisition system (not shown) 110 does not need to be orientated in a particular position relative to the direction of travel. Hence, the body 410 and location of the positioning element 420 is adapted to alleviate the need for a user to rotate the measurement device 400 while tracing the desired path.

The body 410 also provides a housing for the image acquisition system 110, the optical navigation engine (not visible) 120 and the arithmetic engine (not visible) 130. The image acquisition system transmits light through the aperture 440 and onto the object. The image acquisition system 110 then collects the light reflected back through the aperture 440 in order to form the series of images. The series of images are utilized by the optical navigation engine 120 to generate change in position information. The change in position information is utilized by the arithmetic unit 130 to calculate the desired measurements. The desired measurements, as selected by the user, are then presented on the display 430.

In one embodiment in accordance with the invention, the inputs (e.g., buttons) 450 may be utilized to turn the measurement instrument 410 on/off, to indicated the starting point of the desired path, to indicated the end point of the desired path, to clear the previous measurement, to select a type of calculation (e.g., distance, area), select a unit of measure and/or select a scale factor, and the like.

In one embodiment in accordance with the invention, the display 430 presents the calculation to the user. In one embodiment in accordance with the invention, the calculation is displayed upon an indication that the entire path has been traced. In another embodiment in accordance with the invention, the calculation is displayed and updated as the path is being traced. The display may further be utilized to indicate the type calculation being performed, the unit of measure and/or scale factor being utilized.

Embodiments in accordance with the invention are advantageous in that the measurement instrument is capable of readily calculating the distance along a regular or irregular path and/or the area enclosed therein. Embodiments in accordance with the invention are also advantageous in that the device is lightweight and may be contained in an ergonomic form factor. Embodiments in accordance with the invention are also advantageous in that accuracy and resolution is not affected by inadequate friction or gravitation forces or sampling rates. In addition, the image acquisition does not need to be pivoted by the user as a given path is traced. Accordingly, the measurement instrument does not suffer from measurement errors resulting from pivoting or non-pivoting of the instrument while tracing a given path.

Furthermore, the light source provides illumination of a given area of the object. Accordingly, the illumination enhances the user's ability to see details on the object and move the positioning element as desired. The image acquisition system is also resistant to contamination that can affect the accuracy of measurements.

The foregoing descriptions of specific embodiments in accordance with the invention have been presented for purposes of illustration and description. They are not intended to be exhaustive or to limit the invention to the precise forms disclosed, and obviously many modifications and variations are possible in light of the above teaching. The embodiments in accordance with the invention were chosen and described in order to best explain the principles of the invention and its practical application, to thereby enable others skilled in the art to best utilize the invention and various modifications as are suited to the particular use contemplated. It is intended that the scope of the invention be defined by the Claims appended hereto and their equivalents.

## Claims

1. A measurement instrument comprising:
an image acquisition system (110);
an optical navigation engine (120) communicatively coupled to said image acquisition system (110);
an arithmetic engine (130) communicatively coupled to said optical navigation engine (120); and
a display (140) communicatively coupled to said arithmetic engine (130).

2. The measurement instrument according to Claim 1, further comprising a user control module (150) communicatively coupled to said arithmetic engine (130).

3. The measurement instrument according to Claim 1 or 2, further comprising a communication port (160) communicatively coupled to said arithmetic engine (130).

4. The measurement instrument according to any of Claims 1 to 3, wherein said image acquisition system (110) comprises:
a light source (210);
a first lens (220) for focusing light from said light source (210) on a given area of an object (260);
an optical sensor (250);
a second lens (240) for focusing light reflected from said given area of said object (260) on said optical sensor (250); and
a positioning element (230) for tracing a given path, wherein said light source (210), said first lens (220) said optical sensor (250) and second lens (240) all move relative to a movement of said positioning element (230).

5. A method of making measurements comprising:
generating a series of images of a given area of an object (310);
detecting a relative change in position in each set of successive images of said series of images (320); and
calculating a distance of a given path on said object as a function of said series of relative change in position (330).

6. The method of making measurements according to Claim 5, further comprising:
receiving a scale factor; and
further calculating said distance of said path as a function of said scale factor.

7. The method of making measurements according to Claim 6, further comprising:
receiving a unit of measure factor; and
further calculating said distance of said path as a function of said unit of measure.

8. The method of making measurements according to Claim 6 or 7, further comprising calculating an area enclosed by said given path as a function of said series of relative change in position (340).

9. A measurement instrument comprising:
a positioning element (420) for tracing a given path on an object;
an image acquisition system (110) for generating a series of images along said given path;
an optical navigation engine (120) for detecting a relative change in position in each set of successive images of said series of images;
an arithmetic engine (130) for calculating a distance of a given path on said object as a function of said series of relative change in position, a scale factor and a unit of measure factor; and
a display (430) for presenting said distance.

10. The measurement instrument according to Claim 9, wherein said arithmetic engine (130) calculates an area enclosed by said given path as a function of said series of relative change in position.
